# EUROPÄISCHE PATENTSCHRIFT

(11) **EP 1 171 220 B1**
(45) Veröffentlichungstag und Bekanntmachung des Hinweises auf die Patenterteilung: **23.07.2003**
(21) Anmeldenummer: 00920728.3
(22) Anmeldetag: 19.04.2000
(51) Int. Cl.: B01D 39/16

(54) **MEHRLAGIGES FILTERELEMENT**
MULTILAYER FILTER ELEMENT
ELEMENT FILTRANT MULTICOUCHE

(30) Priorität: 19.04.1999 DE 19917690
(43) Veröffentlichungstag der Anmeldung: 16.01.2002
(73) Patentinhaber: FILTERWERK MANN + HUMMEL GmbH, 71631 Ludwigsburg (DE)
(72) Erfinder: KLEIN, Gunnar-Marcel, D-71579 Spiegelberg (DE)
(74) Vertreter: Voth, Gerhard
(86) Internationale Anmeldenummer: EP0003547
(87) Internationale Veröffentlichungsnummer: WO00062899

(56) Entgegenhaltungen:
- EP-A- 0 572 106
- EP-A- 0 960 645
- DE-A- 4 443 158
- US-A- 5 672 188
- PATENT ABSTRACTS OF JAPAN vol. 1995, no. 34 & JP 07 163819 A (TORAY IND INC), 27. Juni 1995 (1995-06-27)

## Beschreibung

### Gebiet der Erfindung

Die vorliegende Erfindung betrifft allgemein Filterelemente. Insbesondere betrifft die Erfindung Filterelemente zur Filtration von Gasen oder Flüssigkeiten. Ganz speziell betrifft die Erfindung mehrlagige Filterelemente, bei denen in Durchströmungsrichtung mehrere Lagen von Filtermedien aufeinanderfolgen, wobei alle Einzellagen aus synthetischen Fasern bestehen.

### Hintergrund der Erfindung, Stand der Technik

Es ist bekannt, bei Filterelementen unterschiedliche Filtermaterialien zur Erzeugung eines für auszufilternde Partikel, eine durchströmende Flüssigkeit und/oder einen Gasstrom optimalen Filterverhaltens miteinander zu kombinieren. So ist bspw. aus der DE-A-44 43 158 bekannt, ein Meltblown als Filtermedium in einem Gasstrom zusammen mit einem ausschließlich zur Stabilisierung dienenden Trägermaterial einzusetzen.

Weiterhin ist es aus der WO 96/34673 bekannt, bei einem hohlzylindrischen Filterelement mehrere Filterlagen aus einem Meltblown auf einer Trägerlage anzuordnen. Die Lagen bilden dann zusammen ein auswechselbares Filterelement, das in eine Filteranordnung einsetzbar ist.

Die EP A 0 572 106 beschreibt ein Filterelement, welches in Durchströmungsrichtung mehrere Lagen von Filtermedien aufweist, wobei die einzelnen Lagen aus Polyester bestehen. Anströmseitig wird eine Filtermedienlage aus Meltblown verwendet. Die Filtermedienlagen weissen eine in Durchströmungsrichtung zunehmende Filterfeinheit auf.

In der US-A-5,496,627 und der WO 95/17946 ist die Hintereinanderschaltung von Filtermedien aus synthetischen Fasern mit abgestufter Filterfeinheit bekannt, wobei hier die Filterfeinheit der Filterlagen in Strömungsrichtung zunimmt.

Schließlich offenbaren die US-A-5,427,597 und die WO 96/34673 die Anordnung mehrerer oder nur einer Filterlage aus einem nach dem Meltblown-Verfahren hergestellten Vlies auf einer zur Stabilisierung dienenden Trägerlage. Die Filterwirkung der Trägerlage ist dabei gegenüber den anderen Lagen vernachlässigbar.

### Zusammenfassung der Erfindung

Für die heutigen Anforderungen zeigen die Filterelemente nach dem Stand der Technik eine nicht ausreichende thermische und Langzeitstabilität gegenüber gasförmigen und flüssigen Medien.

Es ist daher die Aufgabe der vorliegenden Erfindung, durch eine verbesserte Abstimmung der Einzellagen im Sinne einer Vor-Feinfiltration eine verbesserte Filterleistung des Mehrlagenmediums bei gleicher Luftdurchlässigkeit zu erreichen. Die Filterwirkung soll durch den erfindungsgemäßen Mehrlagenaufbau insgesamt verbessert und über einen langen Zeitraum aufrecht erhalten werden.

Diese Aurgabe wird geiosr aurcn ein mehrlagiges Filterelement der eingangs genannten Art, bei dem alle Filterlagen eine in Durchströmungsrichtung zunehmende Filterfeinheit aufweisen und bei dem mindestens eine anströmseitig angeordnete Filterlage aus einem Meltblown-Vlies besteht nach den Merkmalen des unabhängigen Anspruchs 1.

Der Einsatz einer solchen Filterlage aus Meltblow-Vlies gestattet den Einsatz von Fasern mit einem um bis zu einer Größenordnung reduzierten Faserdurchmesser. Hierdurch wird eine verbesserte Partikelspeicherfähigkeit bei identischem Fraktionsabscheidegrad oder ein verbesserter Fraktionsabscheidegrad bei identischer Partikelspeicherfähigkeit und damit eine verbesserte Filterleistung erzielt.

### Kurze Beschreibung der Zeichnungen

Die Erfindung wird nachfolgend anhand der Zeichnungen näher erläutert. Dabei zeigt
- Fig. 1: schematisch die Anordnung der aufeinanderfolgenden Lagen von Filtermedien beispielhaft anhand von drei Lagen; und
- Fig. 2: eine Prinzipskizze eines Beispiels einer Sternfaltung.

### Detaillierte Beschreibung der Ausführungsbeispiele

Im Unterschied zum Stand der Technik besteht die abströmseitig (reinseitig) angeordnete Filterlage (1) nicht aus Cellulose. Dies gestattet den Einsatz von synthetischen Fasern mit einem um bis zu einer Größenordnung reduzierten Faserdurchmesser. In einer besonders bevorzugten Ausführungsform bestehen die

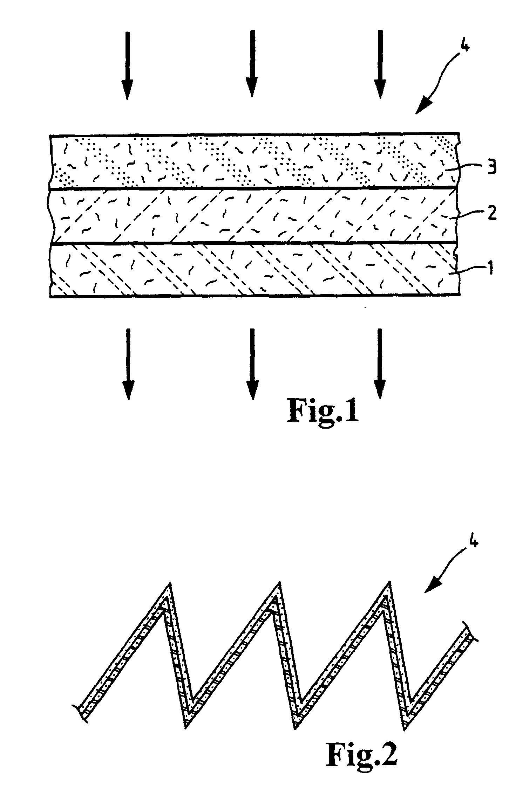

Fig. 1 zeigt ein erfindungsgemäßes mehrlagiges Filterelement. Es besteht mindestens eine anströmseitig(rohseitig) angeordnete Filterlage (3) aus einem Meltblown-Vlies. Durch den gegenüber in anderen Techniken hergestellten Filtervliesen nochmals reduzierten Faserdurchmesser von < 3 µm weisen in Meltblown-Technik hergestellte Vliese eine verbesserte Filterleistung auf.

Durch die Hintereinanderschaltung von Filterlagen mit unterschiedlicher Feinheit ergibt sich ein Vor-Feinfilter-Effekt, der damit zur Steigerung der Leistung der Gesamtanordnung führt. Durch Anordnung der Meltblown-Lage auf der Anströmseite wird die überlegene Partikelspeicherfähigkeit von Meltblown-Vliesen ausgenutzt. Hierbei ergibt sich eine nur geringe Partikel-Beaufschlagung der folgenden Fein-Filterlagen. Durch geeignete Abstimmung des Fraktionsabscheidegrades und der Partikelspeicherfähigkeit der Einzellagen wird eine homogene Beladung des gesamten Filtermaterials und damit die mit dem eingesetzten Material maximale Filterleistung erzielt.

In Fig. 1 ist beispielhaft die Aufeinanderfolge von drei Lagen von Filtermedien gezeigt. Es ist für den Fachmann jedoch klar ersichtlich, dass das erfindungsgemäße Filterelement auch zwei oder mehr als drei Lagen aufweisen kann.

In einer weiteren bevorzugten Ausführungsform kann im Falle des Vorliegens von drei Filtermedienlagen eine dritte Lage (2) zwischen dem anströmseitigen Filtermedium (3) und dem abströmseitigen Filtermedium (1) angeordnet sein. Diese Mittellage kann aus einem Polyester-Vlies und vorzugsweise aus einem Meltblown-Vlies bestehen. Im Falle des Vorliegens eines Meltblown-Vlieses weist dieses bevorzugt ein Flächengewicht von 15-100 g/m² und eine Dicke von 0,05-0,6 mm auf.

Besteht die dritte Lage aus einem einfachen Polyester-Vlies, so liegt das Flächengewicht vorzugsweise zwischen 15 und 150 g/m² und die Dicke vorzugsweise zwischen 0,05 und 1,0 mm.
Im folgenden werden besonders bevorzugte Anordnungen angegeben:
a) Zweilagen-Medium
   Reinseitige Lage (1): Polyester-Vlies; Flächengewicht 50-150 g/m²; Dicke 0,2 - 1,2 mm
   Rohseitige Lage (3): Polyester-Meltblown; Flächengewicht 15-150 g/m²; Dicke 0,05-0,8 mm
b) Dreilagen-Medium
   Reinseitige Lage (1): Polyester-Vlies; Flächengewicht 30-100 g/m²; Dicke 0,1-0,6mm
   Mittlere Lage (2): Polyester-Vlies; Flächengewicht 30-100 g/m²; Dicke 0,1-0,6mm
   Rohseitige Lage (3): Polyester-Meltblown; Flächengewicht 15-150 g/m²; Dicke 0,05-0,8mm
c) Dreilagen-Medium
   Reinseitige Lage (1): Polyester-Vlies; Flächengewicht 30-100 g/m²; Dicke 0,1-0,6mm
   Mittlere Lage (2): Meltblown-Vlies; Flächengewicht 15-100 g/m²; Dicke 0,05-0,6mm
   Rohseitige Lage (3): Polyester-Meltblown; Flächengewicht 10-100 g/m²; Dicke 0,05-0,6mm
d) Dreilagen-Medium
   Reinseitige Lage (1): Polyester-Meltblown; Flächengewicht 15-100 g/m²; Dicke 0,05-0,6mm
   Mittlere Lage (2): Polyester-Vlies; Flächengewicht 30-150 g/m²; Dicke 0,1-1,0mm
   Rohseitige Lage (3): Polyester-Meltblown, Flächengewicht 15-100 g/m²; Dicke 0,05-0,6mm

Es ist anzumerken, dass diese Aufzählung nicht abschließend ist. Für den Fachmann ist klar ersichtlich, dass auch andere Kombinationen der Filtermedienlagen möglich sind.

Gegenüber im Stand der Technik beschriebenen Anordnungen mehrlagiger Filtermedien unter Verwendung mindestens einer cellulosebasierten Filterlage ergibt sich der wesentliche Vorteil, dass durch den Einsatz vollsynthetischer Filterlagen eine verbesserte thermische und Langzeitstabilität gegenüber gasförmigen und flüssigen Medien erzielt wird. Dies ermöglicht den Langzeiteinsatz der Filtermedien im Automotive-Bereich bis hin zum Lebensdauereinsatz.

Weiterhin ergibt sich der Vorteil, dass durch die gegenüber Cellulosemedien verbesserte Filterleistung des reinseitig angeordneten Polyestervlieses eine verbesserte Abstimmung der Einzellagen im Sinne einer Vor-Feinfiltration und damit eine verbesserte Filterleistung des gesamten Mehrlagenmediums bei gleicher Luftdurchlässigkeit vorhanden ist. Dieser Vorteil wird durch die geringen Faserdurchmesser und die große Porösität des Meltblown-Vliesmaterials erreicht. Die Filterwirkung, insbesondere der Abscheidegrad, steigt mit der Aufnahme von ausgefilterten Partikeln während der Gebrauchsdauer zunächst an. Die Filterfeinheit der anströmseitigen Lage ist hierbei so gewählt, dass durch diese Feinlage eine hinreichend lange Standzeit des Filterelements erreichbar ist.

Eine vorteilhafte Weiterverarbeitung der erfindungsgemäßen Filteranlagen erfolgt bevorzugt dadurch, dass die aneinandergefügten Lagen der Filtermedien zur Bildung eines Filterelements 4 (vgl. Fig. 2) stemgefaltet sind. Insbesondere können die Lagen der Filtermedien vor oder während der Faltung ultraschallverschweißt oder durch Flächenpressung während des Faltvorgangs, beispielsweise an einer Prägefaltmaschine, aneinanderfgefügt werden. Die Lagen können auch mit einem Klebstoff verklebt werden, wobei bevorzugt Hotmelt- oder Sprühverklebung zum Einsatz kommt.

Als Anwendungsgebiet für das erfindungsgemäße Filterelement kommen beispielsweise Ölfiltersysteme, insbesondere für ein Kraftfahrzeug, als auch die Filtration von Gasen, insbesondere der Ansaugluft von Verbrennngsmotoren in Frage.

## Patentansprüche

1. Filterelement, insbesondere zur Filterung von Gasen, bei dem in Durchströmungsrichtung mehrere Lagen von Filtermedien (1, 2, 3) aufeinanderfolgen, wobei alle Einzellagen aus synthetischen Fasern bestehen, alle Filtermedienlagen eine in Durchströmungsrichtung zunehmende Filterfeinheit aufweisen und mindestens eine anströmseitig angeordnete Filtermedienlage (3) aus einem Meltblown-Vlies besteht,
**dadurch gekennzeichnet, daß**
das mindestens eine anströmseitig angeordnete Meltblown-Vlies aus Polyester besteht und ein Flächengewicht im Bereich von 10-150 g/m² sowie eine Dicke im Bereich von 0,05-0,8 mm aufweist.

2. Filterelement nach Anspruch 1, **dadurch gekennzeichnet, dass** die synthetischen Fasern Polyesterfasern sind.

3. Filterelement nach einem der vorstehenden Ansprüche, **dadurch gekennzeichnet, daß** drei Lagen von Filtermedien (1, 2 , 3) aufeinanderfolgen.

4. Filterelement nach Anspruch 3, **dadurch gekennzeichnet, dass** die mittlere Lage (2) aus einem Polyester-Vlies besteht.

5. Filterelement nach Anspruch 4, **dadurch gekennzeichnet, dass** das Polyester-Vlies ein Flächengewicht zwischen 15 und 150 g/m² und eine Dicke zwischen 0,05 und 1,0 mm aufweist.

6. Filterelement nach Anspruch 5, **dadurch gekennzeichnet, dass** die dritte Lage (2) aus einem Meltblown-Vlies besteht.

7. Filterelement nach Anspruch 3, **dadurch gekennzeichnet, dass** die dritte Lage ein Flächengewicht von 15-100 g/m² und eine Dicke von 0,05-0,6 mm aufweist.

8. Filterelement nach Anspruch 3, **dadurch gekennzeichnet, dass** zusätzlich die abströmseitig angeordnete Filterlage (1) aus einem Polyester-Meltblown-Vlies besteht.

9. Filterelement nach einem der vorstehenden Ansprüche, **dadurch gekennzeichnet, dass** die aufeinanderfolgenden Lagen von Filtermedien sterngefaltet sind.

10. Filterelement nach einem der vorstehenden Ansprüche, **dadurch gekennzeichnet, dass** die aufeinanderfolgenden Lagen von Filtermedien ultraschallverschweißt sind.

11. Filterelement nach Anspruch 9, **dadurch gekennzeichnet, dass** die aufeinanderfolgenden Lagen von Filtermedien durch Flächenpressung während des Faltvorgangs verbunden werden.

12. Filterelement nach einem der Ansprüche 1 bis 9, **dadurch gekennzeichnet, dass** die aufeinanderfolgenden Lagen von Filtermedien durch Hotmelt- oder Sprühverklebung verbunden werden.

13. Verwendung eines Filterelements nach einem der vorstehenden Anspürche zur Filtration von Gasen, insbesondere der Ansaugluft von Verbrennungsmotoren.

14. Verwendung eines Filterelements nach einem der Ansprüche 1 bis 12 zur Filtration von Flüssigkeiten, insbesondere von Schmierölen für Motoren, Hydraulikölen und Kraftstoffen.

## Claims

1. Filter element, more especially for filtering gases, wherein a plurality of layers of filter media (1, 2, 3) follow one another in succession when viewed with respect to the throughflow direction, all of the individual layers being formed from synthetic fibres, all of the filter media layers having a filter fineness which increases when viewed with respect to the throughflow direction, and at least one filter media layer (3), which is disposed on the inflow side, being formed from a melt-blown non-woven web, **characterised in that** the at least one melt-blown non-woven web, disposed on the inflow side, is formed from polyester and has a weight per unit area within the range of 10-150 g/m² as well as a thickness within the range of 0.05-0.8 mm.

2. Filter element according to claim 1, **characterised in that** the synthetic fibres are polyester fibres.

3. Filter element according to one of the preceding claims, **characterised in that** three layers of filter media (1, 2, 3) follow one another in succession.

4. Filter element according to claim 3, **characterised in that** the centre layer (2) is formed from a polyester non-woven web.

5. Filter element according to claim 4, **characterised in that** the polyester non-woven web has a weight per unit area between 15 and 150 g/m² and a thickness between 0.05 and 1.0 mm.

6. Filter element according to claim 5, **characterised in that** the third layer (2) is formed from a melt-blown non-woven web.

7. Filter element according to claim 3, **characterised in that** the third layer has a weight per unit area of 15-100 g/m² and a thickness of 0.05-0.6 mm.

8. Filter element according to claim 3, **characterised in that** the filter layer (1), disposed on the outflow side, is additionally formed from a polyester melt-blown non-woven web.

9. Filter element according to one of the preceding claims, **characterised in that** the successive layers of filter media are radially folded.

10. Filter element according to one of the preceding claims, **characterised in that** the successive layers of filter media are ultrasonically welded.

11. Filter element according to claim 9, **characterised in that** the successive layers of filter media are joined by surface pressure during the folding operation.

12. Filter element according to one of claims 1 to 9, **characterised in that** the successive layers of filter media are joined by hot-melt adhesion or spray adhesion.

13. Use of a filter element according to one of the preceding claims for filtering gases, more especially the intake air of internal combustion engines.

14. Use of a filter element according to one of claims 1 to 12 for filtering fluids, more especially lubricating oils for engines, hydraulic oils and fuels.

## Revendications

1. Elément de filtre, notamment pour filtrer des gaz, selon lequel plusieurs couches de milieu filtrant (1, 2, 3) se succèdent dans le sens de passage,
toutes les couches séparées sont en fibres de synthèse, toutes les couches de milieu filtrant ont une finesse de filtre croissante dans le sens passant et au moins une couche de milieu filtrant (3) est prévue du côté amont de l'écoulement, cette couche est en un non-tissé obtenu par extrusion-soufflage,
**caractérisé en ce qu'**
au moins un non-tissé obtenu par extrusion-soufflage prévu du côté amont est en polyester et présente une densité surfacique de l'ordre de 10-150 g/m² et une épaisseur de l'ordre de 0,05-0,8 mm.

2. Elément de filtre selon la revendication 1,
**caractérisé en ce que**
les fibres de synthèse sont des fibres de polyester.

3. Elément de filtre selon l'une des revendications précédentes,
**caractérisé en ce que**
les trois couches de milieu filtrant (1, 2, 3) se succèdent l'une l'autre.

4. Elément de filtre selon la revendication 3,
**caractérisé en ce que**
la couche intermédiaire (2) est un non-tissé de polyester.

5. Elément de filtre selon la revendication 4,
**caractérisé en ce que**
le non-tissé de polyester a une densité surfacique comprise entre 15 et 150 g/m² et une épaisseur comprise entre 0,05 et 1,0 mm.

6. Elément filtrant selon la revendication 5,
**caractérisé en ce que**
la troisième couche (2) est formée d'un non-tissé obtenu par extrusion-soufflage.

7. Elément filtrant selon la revendication 3,
**caractérisé en ce que**
la troisième couche a une densité surfacique de 15-100 g/m² et une épaisseur de 0,05-0,6 mm.

8. Elément filtrant selon la revendication 3,
**caractérisé en ce qu'**
en plus la nappe de filtre (1) prévue du côté aval est formée d'un non-tissé en polyester obtenu par extrusion-soufflage.

9. Elément filtrant selon l'une des revendications précédentes,
**caractérisé en ce que**
les nappes successives de milieu filtrant sont pliées en étoile.

10. Elément filtrant selon l'une des revendications précédentes,
**caractérisé en ce que**
les nappes successives de milieu filtrant sont soudées aux ultrasons.

11. Elément filtrant selon la revendication 9,
**caractérisé en ce que**
les nappes successives de milieu filtrant sont reliées par compression de surfaces pendant l'opération de pliage.

12. Elément filtrant selon l'une des revendications 1 à 9,
**caractérisé en ce que**
les nappes successives de milieu filtrant sont reliées par collage par pulvérisation ou collage par colle à chaud.

13. Application d'un élément filtrant selon l'une des revendications précédentes, pour filtrer des. gaz, notamment l'air aspiré par des moteurs à combustion interne.

14. Application d'un élément filtrant selon l'une des revendications 1 à 12 pour filtrer des liquides, notamment des huiles de lubrification de moteurs, des huiles hydrauliques et des carburants.
